# EUROPÄISCHE PATENTSCHRIFT

(11) **EP 4 051 878 B1**
(45) Veröffentlichungstag und Bekanntmachung des Hinweises auf die Patenterteilung: **06.12.2023**
(21) Anmeldenummer: 20823720.6
(22) Anmeldetag: 14.10.2020
(51) Int. Cl.: F01D 5/20, F01D 11/12, F01D 5/22

(54) **LAUFSCHAUFELANORDNUNG FÜR EINE STRÖMUNGSMASCHINE**
ROTOR BLADE ARRANGEMENT FOR A TURBOMACHINE
AGENCEMENT D'AUBE ROTATIVE POUR UNE TURBOMACHINE

(30) Priorität: 29.10.2019 DE 102019216646
(43) Veröffentlichungstag der Anmeldung: 07.09.2022
(73) Patentinhaber: MTU Aero Engines AG, 80995 München (DE)
(72) Erfinder: MAAR, Karl, 80995 München (DE)
(86) Internationale Anmeldenummer: PCT/DE2020/000242
(87) Internationale Veröffentlichungsnummer: WO 2021/083441

(56) Entgegenhaltungen:
- DE-A1- 19 821 365
- DE-A1-102012 106 175
- US-A1- 2018 135 433
- US-A1- 2019 010 818

## Beschreibung

### Technisches Gebiet

Die vorliegende Erfindung betrifft eine Laufschaufelanordnung für eine Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Die Turbine ist in der Regel aus mehreren Stufen mit jeweils einem Stator (Leitschaufelkranz) und einem Rotor (Laufschaufelkranz) aufgebaut, die Rotoren werden von dem Heißgas angetrieben. In jeder Stufe wird dem Heißgas dabei anteilig innere Energie entzogen, die in eine Bewegung des jeweiligen Laufschaufelkranzes und damit der Welle umgesetzt wird. Beispiele für Stufen von Strömungsmaschinen sind aus den Dokumenten US20180135433A1, US20190010818A1, DE102012106175A1 und DE19821365A1 bekannt.

Der vorliegende Gegenstand betrifft eine Laufschaufelanordnung mit einer Laufschaufel. Die Laufschaufel kann im Allgemeinen auch im Verdichterbereich Anwendung finden, also im Verdichtergaskanal angeordnet werden; bevorzugt ist eine Anwendung im Turbinenbereich, wird sie also im Heißgaskanal platziert.

### Darstellung der Erfindung

Der vorliegenden Erfindung liegt das technische Problem zugrunde, eine besonders vorteilhafte Laufschaufelanordnung anzugeben.

Dies wird erfindungsgemäß mit der Laufschaufelanordnung gemäß Anspruch 1 gelöst. Diese weist eine Dichtungsanordnung auf, die eine nach radial innen offene Kavität bildet. Darin ist eine Dichtspitze, auch als Dichtfin bezeichnet, des Laufschaufelblatts angeordnet. Die Dichtungsanordnung ist aus einem ersten Dichtelement, nämlich einem ersten Dichtungsträger mit einem ersten Einlaufbelag, und einem zweiten Dichtelement zusammengesetzt. Der erste Einlaufbelag begrenzt die Kavität nach radial außen, und das zweite Dichtelement begrenzt die Kavität in einer Axialrichtung.

In der Kavität ist die Dichtspitze also nicht nur radial, sondern auch axial eingefasst, was ein Überströmen des Außendeckbands verringern kann. So kann bspw. der Ausbildung von Verwirbelungen vorgebeugt werden, die anderenfalls mit der Hauptströmung im Gaskanal interagieren und zu aerodynamischen Verlusten führen können. Die Anordnung der Dichtspitze in der Kavität kann also einerseits einen Effizienzvorteil ergeben, wobei der mehrteilige Aufbau der Dichtungsanordnung andererseits gleichwohl noch eine gute Montierbarkeit ermöglichen kann. Indem das zweite Dichtelement, welches die Kavität in der Axialrichtung begrenzt und damit gewissermaßen einen axialen Hinterschnitt bildet, mit dem ersten Dichtelement zusammengesetzt wird, ergibt sich eine gute axiale Montierbarkeit.

Bevorzugte Ausführungsformen finden sich in den abhängigen Ansprüchen und der gesamten Offenbarung, wobei in der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Werden bspw. die Vorteile der Laufschaufel in einer bestimmten Anwendung beschrieben, ist dies als Offenbarung sowohl der entsprechend ausgelegten Laufschaufel als auch einer solchen Verwendung zu lesen.

Die Angaben "axial", "radial" und "umlaufend", sowie die zugehörigen Richtungen (Axialrichtung etc.) beziehen sich auf die Drehachse, um welche die Laufschaufel im Betrieb rotiert. Diese fällt typischerweise mit einer Längsachse des Triebwerks bzw. Triebwerkmoduls zusammen. Wie nachstehend im Einzelnen dargelegt, kann die Laufschaufelanordnung bevorzugt in einem Turbinenmodul Anwendung finden, insbesondere in einem schnelllaufenden Turbinenmodul (z. B. Niederdruckturbinenmodul). Aufgrund der großen Umfangsgeschwindigkeiten und Druckdifferenzen können die vorstehend geschilderten Interaktionen (Überströmen/Verwirbelung) hier von besonderer Bedeutung sein. Zudem kann bei einer schnelllaufenden Turbinenschaufel bspw. auch das Außendeckband wegen der Fliehkräfte gewichtsreduziert, bspw. zurückgeschnitten gestaltet sein, was die Gefahr von aerodynamischen Verlusten bzw. Kavitätenwirbeln weiter erhöhen kann.

Im Allgemeinen können an dem Außendeckband der Laufschaufel auch mehrere Dichtspitzen axial aufeinanderfolgend angeordnet sein, die dann gemeinsam in der Kavität der Dichtungsanordnung angeordnet sind. Wenngleich mehrere Dichtspitzen mit Blick auf die Dichtwirkung von Vorteil sein können, kann gemäß einer alternativ bevorzugten Variante auch nur eine einzige Dichtspitze vorgesehen sein. Dies kann bspw. mit Blick auf das schnelllaufende Turbinenmodul aufgrund der verringerten Fliehkraft von Vorteil sein, speziell bei Anwendung von vergleichsweise spröden Werkstoffe (z. B. TiAl).

Ein Dichtungsträger ist ein Trägerelement, bspw. ein gebogenes Blech, welches der Befestigung relativ zu anderen Bauteilen dient. Er kann sich bspw. am Außendeckband des vorgelagerten Leitschaufelkranzes und/oder am Außendeckband des nachgelagerten Leitschaufelkranzes abstützen. Der Dichtungsträger trägt den Einlaufbelag und hält diesen in Position, die beiden sind relativ zueinander lagefixiert. Bei dem Einlaufbelag kann es sich bspw. um eine Wabenstruktur handeln, die zur Kavität hin offene Waben bildet, z. B. in Form einer Honigwabenstruktur. Der Einlaufbelag kann an dem Dichtungsträger befestigt sein, bspw. angelötet, die beiden können aber auch einstückig miteinander hergestellt sein, etwa durch generative Fertigung (z. B. in einem Pulverbettverfahren).

Der erste Dichtungsträger mit dem ersten Einlaufbelag ist mit dem zweiten Dichtelement zusammengesetzt, die beiden sind also als zuvor separat angefertigte Bauteile zu der Dichtungsanordnung zusammengesetzt. Die Dichtelemente können bspw. beim Zusammenbau des Triebwerksmoduls zusammengesetzt und relativ zueinander lagefixiert werden. Im Falle des zweiten Dichtelements kann im Allgemeinen bspw. auch ein Dichtungsträger für sich, also z. B. ein gebogenes Blech ohne gesonderten Einlaufbelag, die Kavität axial begrenzen.

Gemäß einer bevorzugten Ausführungsform beträgt das Volumen der Kavität höchstens 2·(H+S)·π·R·B, vorzugsweise höchstens 1,6·(H+S)·π·R·B, besonders bevorzugt höchstens 1,2·(H+S)·π·R·B. Mögliche Untergrenzen können z. B. bei 0,6·(H+S)·π·R·B bzw. 0,8·(H+S)·π·R·B liegen. Dabei ist R der Radius bis zu einer Außenwandfläche des Außendeckbands, H die Höhe der Dichtspitze, B die Breite des Außendeckbands, S die Spaltweite zwischen der Dichtspitze und dem ersten Einlaufbelag und π die Kreiszahl Pi mit π ≈ 3,14159. Im Falle eines gestuften Außendeckbands werden die Volumina der Kavität vor und hinter der Dichtspitze getrennt berechnet.

Auch das zweite Dichtelement ist ein Dichtungsträger mit einem Einlaufbelag ("zweiter Einlaufbelag"). Der zweite Einlaufbelag begrenzt die Kavität in der Axialrichtung. Damit können bspw. enge Spaltenmaße erreicht werden, auch mit Blick auf einen Axialversatz der Laufschaufel bzw. des Außendeckbands in unterschiedlichen Betriebspunkten, was die Gefahr des Überströmens entsprechend verringern kann.

Gemäß einer Weiterbildung ist das zweite Dichtelement (32), insbesondere sein zweite Dichtungsträger (32.1), in eine zur Laufschaufel (21) stromabwärtig benachbarte Leitschaufel integriert. Dabei kann das zweite Dichtelement oder der zweite Dichtungsträger ein Teil dieser Leitschaufel sein und/oder integral mit dieser ausgebildet sein. Das zweite Dichtelement oder der zweite Dichtungsträger kann auch direkt mit der stromabwärtig benachbarten Leitschaufel verbunden sein, insbesondere zerstörungsfrei lösbar oder unlösbar an dieser befestigt sein.

Alternativ oder zusätzlich kann auch das erste Dichtelement (31), insbesondere sein erster Dichtungsträger (31.1), in eine zur Laufschaufel (21) stromaufwärtig benachbarte Leitschaufel integriert sein. Dabei kann das erste Dichtelement oder der erste Dichtungsträger ein Teil dieser Leitschaufel sein und/oder integral mit dieser ausgebildet sein. Das erste Dichtelement oder der erste Dichtungsträger kann auch direkt mit der stromaufwärtig benachbarten Leitschaufel verbunden sein, insbesondere zerstörungsfrei lösbar oder unlösbar an dieser befestigt sein.

Durch diese Zusammenfassung von Funktionen in weniger Bauteilen können Vorteile in der (De-)Montage erzielt werden. Zudem können sich Vorteile bei der Dichtigkeit und damit beim Wirkungsgrad ergeben.

In bevorzugter Ausgestaltung hat der am zweiten Dichtungsträger angeordnete zweite Einlaufbelag mit dem Außendeckband der Laufschaufel einen axialen Überlapp, jedenfalls in einem Betriebspunkt. Der axiale Überlapp kann z. B. in der Montageposition bestehen, bevorzugt ist er jedenfalls im Auslegungsbetriebspunkt (*Aerodynamic Design Point,* ADP) gegeben, also unter Berücksichtigung jenes Axialversatzes, den das Außendeckband im ADP gegenüber der Montageposition hat. Im Bereich des axialen Überlapps kann ein radialer Abstand zwischen dem zweiten Einlaufbelag und dem Außendeckband, nämlich dessen dem Gaskanal abgewandter Außenwandfläche, bevorzugt nicht mehr als das 3-fache einer radialen Dicke des Außendeckbands ausmachen. Im Falle einer variierenden Außendeckbanddicke wird hierbei ein über das Außendeckband gebildeter Mittelwert zugrundegelegt, der radiale Abstand wird hingegen als kleinster Abstand zwischen der Außenwandfläche des Außendeckbands und dem zweitem Einlaufbelag genommen. Dieser Abstand kann auch gegen Null gehen, andererseits kann es aber auch Untergrenzen bei z. B. dem 0,5-bzw. 1-Fachen der Außendeckbanddicke geben.

Gemäß einer bevorzugten Ausführungsform hat der zweite Einlaufbelag in sämtlichen Betriebspunkten, also unter Berücksichtigung des maximal möglichen Axialversatzes des Außendeckbands, jeweils einen axialen Überlapp mit dem Außendeckband. Damit kann das Überströmen des Außendeckbands in sämtlichen Betriebspunkten verringert, also die Dichtwirkung bzw. Effizienz verbessert werden.

Gemäß einer bevorzugten Ausführungsform begrenzt der erste Dichtungsträger und/oder begrenzt der zweite Dichtungsträger mit seiner der Kavität abgewandten Rückseite einen Hohlraum. Die Dichtungsträger erstrecken sich also in einem Axialschnitt betrachtet vergleichsweise eng um die Kavität, wobei die rückseitig entstehenden Hohlräume frei bleiben, was bspw. hinsichtlich einer Gewichtsoptimierung von Vorteil sein kann. Ein jeweiliger Hohlraum hat bevorzugt ein Volumen, das mindestens das 0,5-, 1-, 1,5-, 2-, 3- bzw. 4-Fache des Außenvolumens der Kavität ausmacht (mögliche Obergrenzen können z. B. bei dem 8-, 6- bzw. 5-Fachen liegen).

Der erste Dichtungsträger begrenzt bzw. bildet mit einem ersten Axialabschnitt die Kavität und begrenzt mit einem zweiten Axialabschnitt den Gaskanal nach radial außen. In der Kavität, welche jedenfalls zum Teil von dem ersten Einlaufbelag und gegebenenfalls auch zum Teil von dem Dichtungsträger selbst begrenzt wird, ist bevorzugt nicht nur die Dichtspitze angeordnet, sondern das gesamte Außendeckband aufgenommen. Eine dem Gaskanal radial zugewandte Innenwandfläche des Außendeckbands kann vorzugsweise auf derselben radialen Höhe wie eine Innenwandfläche des ersten Dichtungsträgers im zweiten Axialabschnitt liegen. Bevorzugt gibt es zwischen den Axialabschnitten des ersten Dichtungsträgers in einem Axialschnitt betrachtet einen Knickpunkt ("erster Knickpunkt"), an dem der Dichtungsträger nach radial außen springt (von dem zweiten zum ersten Axialabschnitt).

Auch der zweite Dichtungsträger bildet mit einem ersten Axialabschnitt die Kavität und begrenzt mit einem zweiten Axialabschnitt den Gaskanal der Strömungsmaschine nach radial außen. Die dem Gaskanal zugewandte Innenwandfläche des Außendeckbands kann wiederum radial bündig mit der den Gaskanal begrenzenden Innenwandfläche des Dichtungsträgers im zweiten Axialabschnitt liegen. Zwischen den Axialabschnitten des zweiten Dichtungsträgers gibt es in einem Axialschnitt betrachtet bevorzugt einen Knickpunkt ("zweiter Knickpunkt"), an dem der Radialversatz eintritt.

In bevorzugter Ausgestaltung liegt in einem Axialschnitt betrachtet ein Referenzpunkt des Außendeckbands von einer Verbindungslinie zwischen den Knickpunkten der Dichtungsträger allenfalls in einem radialen Abstand, der dem Betrag nach nicht mehr als das 3-fache der radialen Außendeckbanddicke ausmacht (betrachtet in Montageposition). Weitere mögliche Obergrenzen liegen bei höchstens dem 2- bzw. 1-fachen, der Referenzpunkt kann auch genau auf der Verbindungslinie liegen. Den Referenzpunkt bildet per definitionem ein Punkt in der Innenwandfläche des Außendeckbands, der dort axial mittig liegt.

Gemäß einer bevorzugten Ausführungsform weist die Dichtungsanordnung einen dritten Einlaufbelag auf, welcher dem zweiten Dichtelement axial gegenüberliegt. Entsprechend begrenzt der dritte Einlaufbelag die Kavität in der entgegengesetzten Axialrichtung, also entgegengesetzt zum zweiten Einlaufbelag. Die Kavität wird also bevorzugt in beiden Axialrichtungen jeweils von einem Einlaufbelag begrenzt, in Verbindung mit der radialen Begrenzung durch den ersten Einlaufbelag.

Der erste und der dritte Einlaufbelag können bspw. in einem solchen Axialabstand vorgesehen sein, dass der axiale Abstand zu der Dichtspitze in jenem Betriebszustand, in dem das Außendeckband maximal nach axial vorne versetzt ist (dritter Einlaufbelag) bzw. maximal nach axial hinten versetzt ist (zweiter Einlaufbelag) nicht mehr als das 3-fache der Außendeckbanddicke ausmacht (mit möglichen Untergrenzen bei dem 0,5- bzw. 1-fachen).

In bevorzugter Ausgestaltung ist der dritte Einlaufbelag gemeinsam mit dem ersten Einlaufbelag am ersten Dichtungsträger angeordnet. Besonders bevorzugt können der erste und der dritte Einlaufbelag einstückig miteinander ausgebildet sein, also als zusammenhängendes Teil hergestellt sein. Im Falle einer Wabenstruktur können bevorzugt sowohl die Waben des ersten Einlaufbelags als auch jene des dritten Einlaufbelags nach radial innen offen sein. Auch unabhängig davon können die Waben des zweiten Einlaufbelags bevorzugt axial offen sein, bspw. im Falle des Turbinenmoduls nach axial vorne, zur Hinterkante des Außendeckbands hin.

Der dritte Einlaufbelag hat in bevorzugter Ausgestaltung in zumindest einem Betriebspunkt, bevorzugt in sämtlichen Betriebspunkten (Berücksichtigung des maximal möglichen Axialversatzes) einen axialen Überlapp mit dem Außendeckband. Bezüglich weiterer Angaben und Konkretisierungen, insbesondere auch Spaltmaße etc. betreffend, wird ausdrücklich auf die vorstehende Offenbarung zum zweiten Einlaufbelag verwiesen. Besonders bevorzugt haben sowohl der zweite als auch der dritte Einlaufbelag in jedem Betriebspunkt jeweils einen axialen Überlapp mit dem Außendeckband, was eine besonders gute Dichtwirkung ergibt.

Die Erfindung betrifft auch ein Turbinenmodul für eine Strömungsmaschine, insbesondere für ein Flugtriebwerk. Besonders bevorzugt handelt es sich um ein schnelllaufendes Turbinenmodul, die Laufschaufel kann also bspw. mit einem An² von mindestens 2000 m²/s² rotieren (mit weiteren Untergrenzen bei 4000 m²/s² bzw. 5000 m²/s² und Obergrenzen bei z. B. 9000 m²/s² bzw. 6000 m²/s²). Hierbei ergibt sich An² über die Ringraumfläche, insbesondere am Austritt, multipliziert mit der Drehzahl im ADP-Bereich im Quadrat.

In dem Turbinenmodul ist das zweite Dichtelement bevorzugt stromab des ersten Dichtungsträgers mit dem ersten Einlaufbelag angeordnet. Es begrenzt dann also bspw. der zweite Einlaufbelag die Kavität nach axial hinten und der dritte Einlaufbelag die Kavität nach axial vorne. Eine Montage erfolgt dann bevorzugt von der Brennkammer weg nach axial hinten, es wird also zuerst der erste Dichtungsträger mit dem ersten und bevorzugt auch dem dritten Einlaufbelag montiert, anschließend wird das zweite Dichtelement bzw. der zweite Dichtungsträger mit dem zweiten Einlaufbelag angesetzt.

Die Erfindung betrifft ferner ein Verfahren zum Herstellen einer solchen Laufschaufelanordnung bzw. des Turbinenmoduls, wobei das erste und zweite Dichtelement zusammengesetzt werden.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: schematisch ein Mantelstromtriebwerk in einem Axialschnitt;
- Figur 2: eine erfindungsgemäße Laufschaufelanordnung in einer teilweise geschnittenen, schematischen Seitenansicht;
- Figur 3: eine weitere nicht zur Erfindung gehörende Laufschaufelanordnung in einer teilweise geschnittenen, schematischen Seitenansicht;
- Figur 4: die Laufschaufelanordnung gemäß Figur 2 zur Illustration einer Radiallage;
- Figur 5: die Laufschaufelanordnung gemäß Figur 2 zur Illustration eines Axialversatzes in unterschiedlichen Betriebspunkten.

### Bevorzugte Ausführung der Erfindung

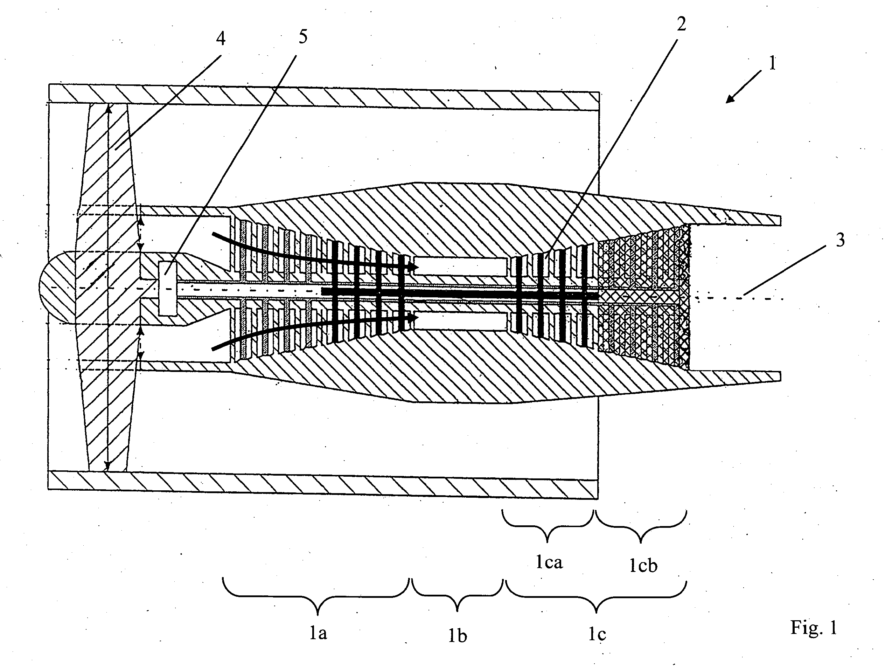

**Figur 1** zeigt eine Strömungsmaschine 1 in schematischer Ansicht, konkret ein Mantelstromtriebwerk. Die Strömungsmaschine 1 gliedert sich funktional in Verdichter 1a, Brennkammer 1b und Turbine 1c, letztere weist ein Hochdruckturbinenmodul 1ca und ein Niederdruckturbinenmodul 1cb auf. Dabei sind sowohl der Verdichter 1a als auch die Turbine 1c jeweils aus mehreren Stufen aufgebaut, jede Stufe setzt sich aus einem Leit- und einem Laufschaufelkranz zusammen. Bezogen auf die Umströmung im Gaskanal 2 ist je Stufe der Laufschaufel- dem Leitschaufelkranz nachgelagert. Im Betrieb rotieren die Laufschaufeln um die Längsachse 3. Der Fan 4 ist über ein Getriebe 5 gekoppelt, die Laufschaufelkränze des Niederdruckturbinenmoduls 1cb rotieren im Betrieb schneller als der Fan 4.

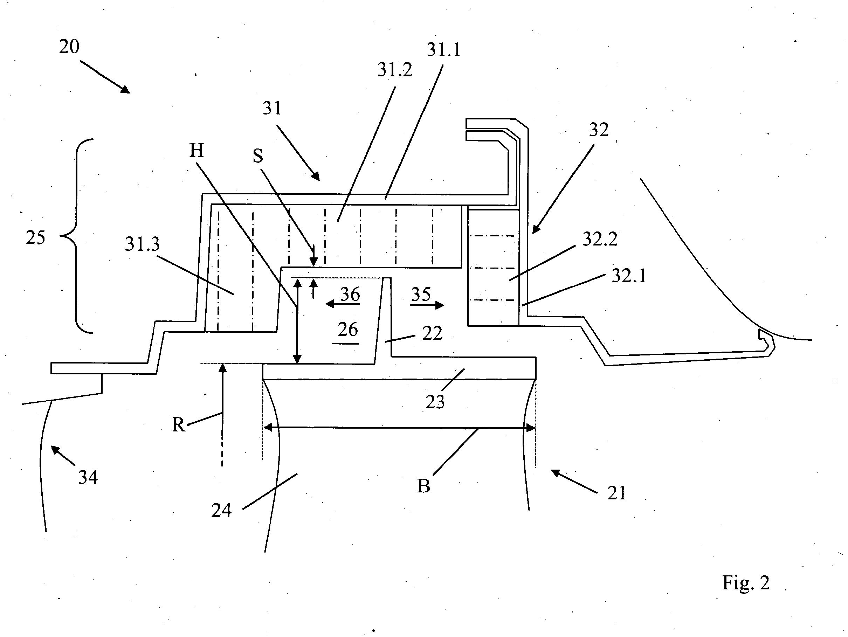

**Figur 2** zeigt eine Laufschaufelanordnung 20 mit einer Laufschaufel 21, die radial außen eine Dichtspitze 22 aufweist. Die Dichtspitze 22 ist an einem Außendeckband 23 angeordnet, radial innerhalb davon findet sich das Laufschaufelblatt 24. Die Laufschaufelanordnung 20 weist ferner eine Dichtungsanordnung 25 auf, die eine Kavität 26 bildet, in welcher die Dichtspitze 22 angeordnet ist. Die Dichtspitze 22 ist in der Kavität 26 nicht nur radial, sondern auch axial eingefasst, was eine gute Dichtwirkung ergibt, vgl. die Beschreibungseinleitung im Einzelnen.

Die Dichtungsanordnung 25 ist dabei mehrteilig aufgebaut, nämlich aus einem ersten Dichtelement 31 und einem zweiten Dichtelement 32 zusammengesetzt. Dies ergibt eine axiale Montierbarkeit, bei der Montage eines Turbinenmoduls 1ca,cb kann zunächst das erste Dichtelement 31 an der vorgelagerten Leitschaufel 34 montiert und kann dann die Laufschaufel 21 positioniert werden. Anschließend wird das zweite Dichtelement 32 angesetzt und damit die Kavität 26 axial geschlossen.

Das erste Dichtelement 31 weist einen ersten Dichtungsträger 31.1 und einen ersten Einlaufbelag 31.2 auf. Vorliegend handelt es sich bei dem Dichtungsträger 31.1 um ein gebogenes Blech, den Einlaufbelag 31.2 bildet eine nach radial innen offene Wabenstruktur. Der erste Einlaufbelag 31.2 begrenzt die Kavität 26 nach radial außen.

Das zweite Dichtelement 32 weist einen zweiten Dichtungsträger 32.1 und einen zweiten Einlaufbelag 32.2 auf, vorliegend eine axial offene Wabenstruktur. Der zweite Einlaufbelag 32.2 begrenzt die Kavität 26 in einer Axialrichtung 35. Ferner gibt es einen dritten Einlaufbelag 31.3, der hier als Teil des ersten Dichtelements 31 am ersten Dichtungsträger 31.1 angeordnet und einstückig mit dem ersten Einlaufbelag 31.2 ausgebildet ist. Der dritte Einlaufbelag 31.3 begrenzt die Kavität 26 in einer der Axialrichtung 35 entgegengesetzten Axialrichtung 36.

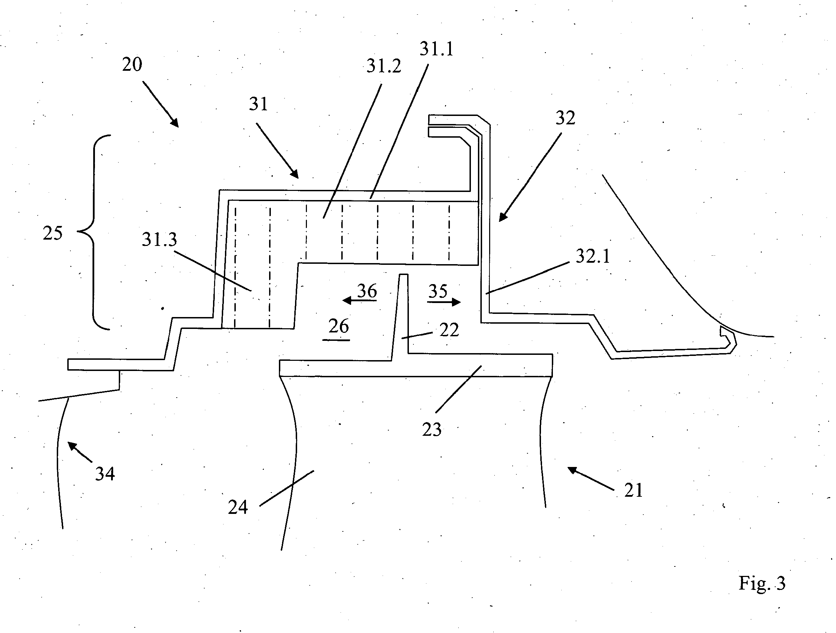

**Figur 3** zeigt eine weitere nicht zur Erfindung gehörende Laufschaufelanordnung 20, wobei baugleiche Teil bzw. Teile mit der gleichen Funktion mit den gleichen Bezugszeichen versehen sind und insofern auf die Beschreibung zu Figur 2 verwiesen wird. Im Unterschied zu Figur 2 weist das zweite Dichtelement 32 in diesem Fall keinen Einlaufbelag auf, stattdessen begrenzt der Dichtungsträger 32.1 selbst die Kavität 26 in der Axialrichtung 35. Dies kann eine vereinfachte Variante darstellen, bei welcher aber auch die Dichtungswirkung etwas verringert ist.

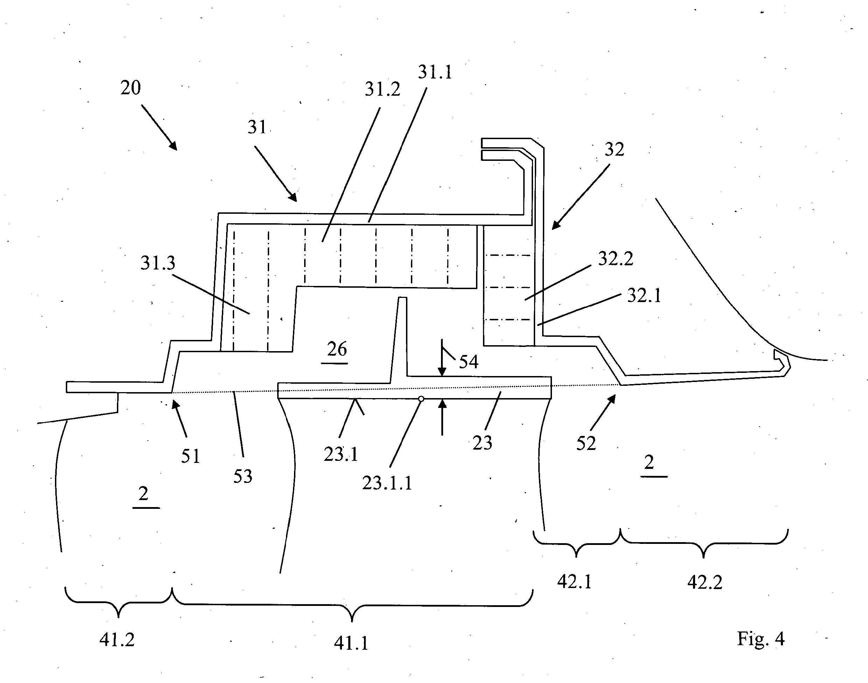

**Figur 4** bezieht sich wiederum auf die Laufschaufelanordnung 20 gemäß Figur 3. Daraus ist zunächst ersichtlich, dass ein erster Axialabschnitt 41.1 des ersten Dichtungsträgers 31.1 die Kavität 26 bildet und ein zweiter Axialabschnitt 41.2 des ersten Dichtungsträgers 31.1 den Gaskanal 2 der Strömungsmaschine 1 radial begrenzt. Gleichermaßen bildet der zweite Dichtungsträger 32.1 in einem ersten Axialabschnitt 42.1 die Kavität 26 und begrenzt er in einem zweiten Axialabschnitt 42.2 den Gaskanal 2 radial. Der erste Dichtungsträger 31.1 hat zwischen dem ersten und dem zweiten Axialabschnitt 41.1,41.2 einen ersten Knickpunkt 51, und der zweite Dichtungsträger 32.1 hat zwischen dem ersten und dem zweiten Axialabschnitt 42.1,42.2 einen zweiten Knickpunkt 52. Bezogen auf eine Verbindungslinie 53 zwischen den Knickpunkten 51,52 liegt ein Referenzpunkt 23.1.1 des Außendeckbands 23 um nicht mehr als das 3-fache einer radialen Dicke 54 des Außendeckbands 23 beabstandet. Der Referenzpunkt 23.1.1 liegt axial mittig in einer Innenwandfläche 23.1 des Außendeckbands 23.

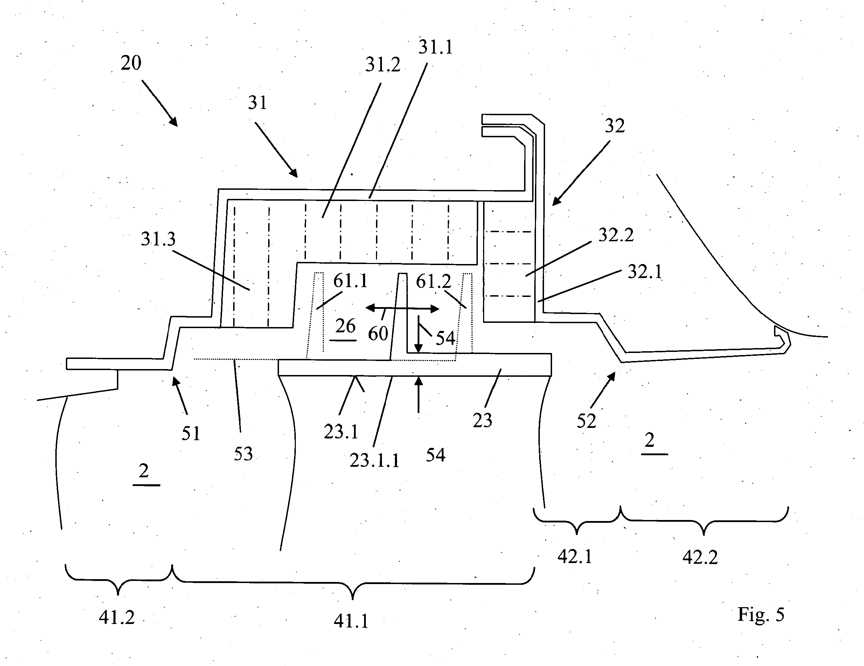

**Figur 5** illustriert, dass das Außendeckband 23 und damit die Dichtspitze 22 in unterschiedlichen Betriebspunkten unterschiedliche Axialpositionen einnehmen kann, es also einen Axialversatz 60 gibt. Dabei sind zwei Axialpositionen 61 strichliiert dargestellt, die den Maximalversatz nach vorne (bei 61.1) bzw. nach hinten (bei 61.2) markieren. Die Betriebspunkte ergeben sich als unterschiedliche Betriebszustände der Strömungsmaschine, im Falle des Flugtriebwerks bspw. bei Start bzw. Landung oder unter Cruise-Bedingung (ADP). Bevorzugt hat jeweils zumindest der zweite Einlaufbelag 32.2 oder der dritte Einlaufbelag 31.3 einen axialen Überlapp mit dem Außendeckband 23, besonders bevorzugt haben beide einen axialen Überlapp.

**BEZUGSZEICHENLISTE**

| | | | |
|---|---|---|---|
| Strömungsmaschine | | | 1 |
| | Verdichter | | 1a |
| | Brennkammer | | 1b |
| | Turbine | | 1c |
| | | Hochdruckturbinenmodul | 1ca |
| | | Niederdruckturbinenmodul | 1cb |
| Gaskanal | | | 2 |
| Längsachse | | | 3 |
| Fan | | | 4 |
| Getriebe | | | 5 |
| Laufschaufelanordnung | | | 20 |
| Laufschaufel | | | 21 |
| Dichtspitze | | | 22 |
| Außendeckband | | | 23 |
| | Innenwandfläche | | 23.1 |
| | | Referenzpunkt | 23.1.1 |
| Laufschaufelblatt | | | 24 |
| Dichtungsanordnung | | | 25 |
| Kavität | | | 26 |
| Erstes Dichtelement | | | 31 |
| | Erster Dichtungsträger | | 31.1 |
| | Erster Einlaufbelag | | 31.2 |
| | Dritter Einlaufbelag | | 31.3 |
| Zweites Dichtelement | | | 32 |
| | Zweiter Dichtungsträger | | 32.1 |
| | Zweiter Einlaufbelag | | 32.2 |
| Vorgelagerte Leitschaufel | | | 34 |
| Axialrichtung | | | 35 |
| Entgegengesetzte Axialrichtung | | | 36 |
| Axialabschnitte (erster Dichtungsträger) | | | 41 |
| | Erster Axialabschnitt | | 41.1 |
| | Zweiter Axialabschnitt | | 41.2 |
| Axialabschnitte (zweiter Dichtungsträger) | | | 42 |
| | Erster Axialabschnitt | | 42.1 |
| | Zweiter Axialabschnitt | | 42.2 |
| Erster Knickpunkt | | | 51 |
| Zweiter Knickpunkt | | | 52 |
| Verbindungslinie | | | 53 |
| Radiale Dicke | | | 54 |
| Axialversatz | | | 60 |
| Axialpositionen | | | 61 |
| | Maximalversatz nach vorne | | 61.1 |
| | Maximalversatz nach hinten | | 61.2 |
| Breite Außendeckband | | | B |
| Höhe Dichtspitze | | | H |
| Radius (Längsachse bis Außenwandfläche Außendeckband) | | | R |
| Spaltweite zwischen Dichtspitze und erstem Einlaufbelag | | | S |

## Patentansprüche

1. Laufschaufelanordnung (20) für eine Strömungsmaschine (1), mit
einer Laufschaufel (21), die radial außen eine Dichtspitze (22) aufweist, und einer Dichtungsanordnung (25),
wobei die Dichtungsanordnung (25) eine nach radial innen offene Kavität (26) bildet, in welcher die Dichtspitze (22) angeordnet ist,
wozu die Dichtungsanordnung (25) ein erstes Dichtelement (31), nämlich einen ersten Dichtungsträger (31.1) mit einem ersten Einlaufbelag (31.2), und ein zweites Dichtelement (32), nämlich einen zweiten Dichtungsträger (32.1) mit einem zweiten Einlaufbelag (32.2), aufweist,
wobei der erste Einlaufbelag (31.2) die Kavität (26) nach radial außen begrenzt und das zweite Dichtelement (32) und der zweite Einlaufbelag (32.2) die Kavität (26) in einer Axialrichtung (35) begrenzen,
und wobei das erste und das zweite Dichtelement (31,32) zusammengesetzt sind, **dadurch gekennzeichnet, dass** der erste Dichtungsträger (31.1) mit einem ersten Axialabschnitt (41.1) die Kavität (26) bildet und mit einem zweiten Axialabschnitt (41.2) einen Gaskanal (2) der Strömungsmaschine (1) radial begrenzt und dass auch der zweite Dichtungsträger (32.1) mit einem ersten Axialabschnitt (42.1) die Kavität (26) bildet und mit einem zweiten Axialabschnitt (42.2) den Gaskanal (2) der Strömungsmaschine (1) radial begrenzt.

2. Laufschaufelanordnung (20) nach Anspruch 1, bei welcher das Volumen der Kavität (26) ≤ 2·(H+S)·π·R·B ist, vorzugsweise ≤ 1,6·(H+S)·π·R·B ist, besonders bevorzugt ≤ 1,2·(H+S)·π·R·B ist, wobei R der Radius bis zu einer Außenwandfläche des Außendeckbands (23) ist, H die Höhe der Dichtspitze (22) ist, B die Breite des Außendeckbands (23) ist und S die Spaltweite zwischen der Dichtspitze (22) und dem ersten Einlaufbelag (31.2) ist.

3. Laufschaufelanordnung (20) nach Anspruch 1 oder 2,
bei welcher das zweite Dichtelement (32), insbesondere der zweite Dichtungsträger (32.1), in eine zur Laufschaufel (21) stromabwärtig benachbarte Leitschaufel integriert ist oder direkt mit dieser verbunden ist und/oder das erste Dichtelement (31), insbesondere der erste Dichtungsträger (31.1), in eine zur Laufschaufel (21) stromaufwärtig benachbarte Leitschaufel integriert ist oder direkt mit dieser verbunden ist.

4. Laufschaufelanordnung (20) nach Anspruch 3, bei welcher der zweite Einlaufbelag (32.2) mit einem Außendeckband (23) der Laufschaufel (21), an welchem sich die Dichtspitze (22) nach radial außen erhebt, in zumindest einem Betriebspunkt einen axialen Überlapp hat.

5. Laufschaufelanordnung (20) nach Anspruch 4, bei welcher im Bereich des axialen Überlapps ein radialer Abstand zwischen dem zweiten Einlaufbelag (32.2) und dem Außendeckband (23) nicht mehr als das 3-fache einer radialen Dicke (54) des Außendeckbands (23) ausmacht.

6. Laufschaufelanordnung (20) nach Anspruch 4 oder 5, bei welcher der zweite Einlaufbelag (32.2) in sämtlichen Betriebspunkten, also unter Berücksichtigung des maximal möglichen Axialversatzes des Außendeckbands (23), jeweils einen axialen Überlapp mit dem Außendeckband (23) der Laufschaufel (21) hat.

7. Laufschaufelanordnung (20) nach einem der vorstehenden Ansprüche, bei welcher der erste Dichtungsträger (31.1) und/oder ein zweiter Dichtungsträger (32.1) des zweiten Dichtelements (32) mit einer der Kavität (26) abgewandten Rückseite einen Hohlraum begrenzt, dessen Volumen vorzugsweise mindestens das 0,5-Fache eines Volumens der Kavität (26) ausmacht.

8. Laufschaufelanordnung (20) nach einem der vorstehenden Ansprüche, bei welcher es, jeweils in einem Axialschnitt betrachtet, zwischen den Axialabschnitten (41.1,41.2) des ersten Dichtungsträgers (31.1) einen ersten Knickpunkt (51) gibt und zwischen den Axialabschnitten (42.1,42.2) des zweiten Dichtungsträgers (32.1) einen zweiten Knickpunkt (52) gibt, wobei ein Referenzpunkt (23.1.1) des Außendeckbands (23), der axial mittig in einer dem Gaskanal (2) zugewandten Innenwandfläche (23.1) des Außendeckbands (23) liegt, von einer Verbindungslinie (53) zwischen dem ersten und dem zweiten Knickpunkt (51,52) allenfalls einen radialen Abstand hat, der dem Betrag nach nicht mehr als das 3-fache einer radialen Dicke (54) des Außendeckbands (23) ausmacht.

9. Laufschaufelanordnung (20) nach einem der vorstehenden Ansprüche, bei welcher die Dichtungsanordnung (25) einen dritten Einlaufbelag (31.3) aufweist, welcher die Kavität (26) in einer entgegengesetzten Axialrichtung (36) begrenzt, wobei bevorzugt der dritte Einlaufbelag (31.3) gemeinsam mit dem ersten Einlaufbelag (31.2) an dem ersten Dichtungsträger (31.1) angeordnet ist.

10. Laufschaufelanordnung (20) nach Anspruch 9, bei welcher der dritte Einlaufbelag (31.3) mit einem Außendeckband (23) der Laufschaufel (21), an welchem sich die Dichtspitze (22) nach radial außen erhebt, in zumindest einem Betriebspunkt einen axialen Überlapp hat.

11. Turbinenmodul (1ca,1cb) für einen Strömungsmaschine (1), insbesondere Niederdruckturbinenmodul (1cb), mit einer Laufschaufelanordnung (20) nach einem der vorstehenden Ansprüche, wobei die Laufschaufelanordnung (20) bevorzugt die letzte Stufe des Turbinenmoduls (1ca, 1cb) bildet.

12. Turbinenmodul (1ca, 1cb) nach Anspruch 11, bei welchem das zweite Dichtelement (32) bezogen auf eine Umströmung der Laufschaufel (21) in einem Gaskanal (2) der Strömungsmaschine (1) stromab des ersten Dichtelements (31) angeordnet ist.

13. Verfahren zum Herstellen einer Laufschaufelanordnung (20) nach einem der Ansprüche 1 bis 10 oder eines Turbinenmoduls (1ca,1cb) nach Anspruch 11 oder 12, bei welchem das erste und das zweite Dichtelement (31,32) zusammengesetzt werden.

## Claims

1. Rotor blade assembly (20) for a turbomachine (1), comprising
a rotor blade (21) having a sealing tip (22) radially on the outside, and a sealing assembly (25),
the sealing assembly (25) forming a radially inwardly open cavity (26) in which the sealing tip (22) is arranged,
for which purpose the sealing assembly (25) has a first sealing element (31), namely a first seal carrier (31.1) having a first abradable coating (31.2), and a second sealing element (32), namely a second seal carrier (32.1) having a second abradable coating (32.2),
the first abradable coating (31.2) delimiting the cavity (26) radially on the outside and the second sealing element (32) and the second abradable coating (32.2) delimiting the cavity (26) in an axial direction (35),
and the first and second sealing elements (31, 32) being assembled, **characterized in that** the first seal carrier (31.1) forms the cavity (26) with a first axial portion (41.1) and radially delimits a gas duct (2) of the turbomachine (1) with a second axial portion (41.2), and **in that** the second seal carrier (32.1) also forms the cavity (26) with a first axial portion (42.1) and radially delimits the gas duct (2) of the turbomachine (1) with a second axial portion (42.2).

2. Rotor blade assembly (20) according to claim 1, wherein the volume of the cavity (26) is ≤ 2·(H+S)·π·R·B, preferably ≤ 1.6·(H+S)·π·R·B, particularly preferably ≤ 1.2·(H+S)·π·R·B, wherein R is the radius up to an outer wall surface of the outer shroud (23), H is the height of the sealing tip (22), B is the width of the outer shroud (23) and S is the gap width between the sealing tip (22) and the first abradable coating (31.2).

3. Rotor blade assembly (20) according to either claim 1 or claim 2,
wherein the second sealing element (32), in particular the second seal carrier (32.1), is integrated into a guide vane that is adjacent downstream to the rotor blade (21) or is connected directly thereto, and/or the first sealing element (31), in particular the first seal carrier (31.1), is integrated into a guide vane that is adjacent upstream to the rotor blade (21) or is connected directly thereto.

4. Rotor blade assembly (20) according to claim 3, wherein the second abradable coating (32.2) has an axial overlap at at least one operating point with an outer shroud (23) of the rotor blade (21) on which the sealing tip (22) projects radially outward.

5. Rotor blade assembly (20) according to claim 4, wherein, in the region of the axial overlap, a radial distance between the second abradable coating (32.2) and the outer shroud (23) makes up no more than 3 times a radial thickness (54) of the outer shroud (23).

6. Rotor blade assembly (20) according to either claim 4 or claim 5, wherein the second abradable coating (32.2) has in each case an axial overlap with the outer shroud (23) of the rotor blade (21) at all operating points, therefore taking into account the maximum possible axial offset of the outer shroud (23).

7. Rotor blade assembly (20) according to any of the preceding claims, wherein the first seal carrier (31.1) and/or a second seal carrier (32.1) of the second sealing element (32) delimits a hollow space with a rear side facing away from the cavity (26), the volume of which hollow space preferably makes up at least 0.5 times a volume of the cavity (26).

8. Rotor blade assembly (20) according to any of the preceding claims, wherein, when viewed in an axial portion in each case, there is a first bend point (51) between the axial portions (41.1, 41.2) of the first seal carrier (31.1) and there is a second bend point (52) between the axial portions (42.1, 42.2) of the second seal carrier (32.1), wherein a reference point (23.1.1) of the outer shroud (23), which is axially centered in an inner wall surface (23.1), facing the gas duct (2), of the outer shroud (23), has at most a radial distance, from a connecting line (53) between the first and second bend points (51, 52), which in terms of its amount makes up no more than 3 times a radial thickness (54) of the outer shroud (23).

9. Rotor blade assembly (20) according to any of the preceding claims, wherein the sealing assembly (25) has a third abradable coating (31.3) which delimits the cavity (26) in an opposite axial direction (36), wherein the third abradable coating (31.3) is preferably arranged on the first seal carrier (31.1) together with the first abradable coating (31.2).

10. Rotor blade assembly (20) according to claim 9, wherein the third abradable coating (31.3) has an axial overlap at at least one operating point with an outer shroud (23) of the rotor blade (21) on which the sealing tip (22) projects radially outward.

11. Turbine module (1ca, 1cb) for a turbomachine (1), in particular a low-pressure turbine module (1cb), comprising a rotor blade assembly (20) according to any of the preceding claims, wherein the rotor blade assembly (20) preferably forms the last stage of the turbine module (1ca, 1cb).

12. Turbine module (1ca, 1cb) according to claim 11, wherein the second sealing element (32) is arranged downstream of the first sealing element (31), relative to a flow around the rotor blade (21) in a gas duct (2) of the turbomachine (1).

13. Method for producing a rotor blade assembly (20) according to any of claims 1 to 10 or a turbine module (1ca, 1cb) according to either claim 11 or claim 12, wherein the first and second sealing elements (31, 32) are assembled.

## Revendications

1. Agencement d'aube mobile (20) pour une turbomachine (1), comportant
une aube mobile (21) qui présente une pointe d'étanchéité (22) radialement à l'extérieur, et un agencement d'étanchéité (25),
dans lequel l'agencement d'étanchéité (25) forme une cavité (26) ouverte radialement vers l'intérieur, dans laquelle est disposée la pointe d'étanchéité (22),
où l'agencement d'étanchéité (25) présente un premier élément d'étanchéité (31), à savoir un premier support d'étanchéité (31.1) comportant une première garniture de rodage (31.2), et un second élément d'étanchéité (32), à savoir un second support d'étanchéité (32.1) comportant une deuxième garniture de rodage (32.2),
dans lequel la première garniture de rodage (31.2) délimite la cavité (26) radialement vers l'extérieur et le second élément d'étanchéité (32) et la deuxième garniture de rodage (32.2) délimitent la cavité (26) dans une direction axiale (35),
et dans lequel le premier et le second élément d'étanchéité (31,32) sont assemblés, **caractérisé en ce que** le premier support d'étanchéité (31.1) forme la cavité (26) avec une première section axiale (41.1) et délimite radialement un conduit de gaz (2) de la turbomachine (1) avec une seconde section axiale (41.2), **et en ce que** le second support d'étanchéité (32.1) forme également la cavité (26) avec une première section axiale (42.1) et délimite radialement le conduit de gaz (2) de la turbomachine (1) avec une seconde section axiale (42.2).

2. Agencement d'aube mobile (20) selon la revendication 1, dans lequel le volume de la cavité (26) est ≤ 2·(H + S)·π·R·B, de préférence est ≤ 1,6·(H + S)·π·R·B, de manière particulièrement préférée est ≤ 1,2·(H + S)·π·R·B, où R représente le rayon jusqu'à une surface de paroi externe du carénage externe (23), H représente la hauteur de la pointe d'étanchéité (22), B représente la largeur du carénage externe (23) et S représente la largeur de fente entre la pointe d'étanchéité (22) et la première garniture de rodage (31.2).

3. Agencement d'aube mobile (20) selon la revendication 1 ou 2,
dans lequel le second élément d'étanchéité (32), en particulier le second support d'étanchéité (32.1), est intégré dans une aube directrice voisine en aval de l'aube mobile (21) ou est directement relié à celle-ci et/ou le premier élément d'étanchéité (31), en particulier le premier support d'étanchéité (31.1), est intégré dans une aube directrice adjacente en amont de l'aube mobile (21) ou est directement relié à celle-ci.

4. Agencement d'aube mobile (20) selon la revendication 3, dans lequel la deuxième garniture de rodage (32.2) possède, avec un carénage externe (23) de l'aube mobile (21) au niveau duquel la pointe d'étanchéité (22) s'élève radialement vers l'extérieur, un chevauchement axial à au moins un point de fonctionnement.

5. Agencement d'aube mobile (20) selon la revendication 4, dans lequel, dans la zone du chevauchement axial, une distance radiale entre la deuxième garniture de rodage (32.2) et le carénage externe (23) représente au plus 3 fois une épaisseur radiale (54) du carénage externe (23).

6. Agencement d'aube mobile (20) selon la revendication 4 ou 5, dans lequel la deuxième garniture de rodage (32.2) possède respectivement un chevauchement axial avec le carénage externe (23) de l'aube mobile (21) à tous les points de fonctionnement, en tenant compte également du décalage axial maximal possible du carénage externe (23).

7. Agencement d'aube mobile (20) selon l'une des revendications précédentes, dans lequel le premier support d'étanchéité (31.1) et/ou un second support d'étanchéité (32.1) du second élément d'étanchéité (32) délimitent, avec une face arrière opposée à la cavité (26), un espace creux dont le volume représente de préférence au moins 0,5 fois un volume de la cavité (26).

8. Agencement d'aube mobile (20) selon l'une des revendications précédentes, dans lequel il y a un premier point de flexion (51) entre les sections axiales (41.1,41.2) du premier support d'étanchéité (31.1) et il y a un second point de flexion (52) entre les sections axiales (42.1,42.2) du second support d'étanchéité (32.1), respectivement considérés dans une section axiale, dans lequel un point de référence (23.1.1) du carénage externe (23), lequel point de référence se trouve axialement au centre dans une surface de paroi interne (23.1) du carénage externe (23) tournée vers le conduit de gaz (2), possède éventuellement une distance radiale à partir d'une ligne de liaison (53) entre le premier et le second point de flexion (51,52), laquelle distance radiale représente, en valeur, au plus 3 fois une épaisseur radiale (54) du carénage externe (23).

9. Agencement d'aube mobile (20) selon l'une des revendications précédentes, dans lequel l'agencement d'étanchéité (25) présente une troisième garniture de rodage (31.3) qui délimite la cavité (26) dans une direction axiale opposée (36), dans lequel, de préférence, la troisième garniture de rodage (31.3) est disposée conjointement avec la première garniture de rodage (31.2) sur le premier support d'étanchéité (31.1).

10. Agencement d'aube mobile (20) selon la revendication 9, dans lequel la troisième garniture de rodage (31.3) possède, avec un carénage externe (23) de l'aube mobile (21) sur lequel la pointe d'étanchéité (22) s'élève radialement vers l'extérieur, un chevauchement axial à au moins un point de fonctionnement.

11. Module de turbine (1ca,1cb) pour une turbomachine (1), en particulier module de turbine basse pression (1cb), comportant un agencement d'aube mobile (20) selon l'une des revendications précédentes, dans lequel l'agencement d'aube mobile (20) forme de préférence le dernier étage du module de turbine (1ca, 1cb).

12. Module de turbine (1ca, 1cb) selon la revendication 11, dans lequel le second élément d'étanchéité (32) est disposé en aval du premier élément d'étanchéité (31) par rapport à un écoulement autour de l'aube mobile (21) dans un conduit de gaz (2) de la turbomachine (1).

13. Procédé de fabrication d'un agencement d'aube mobile (20) selon l'une des revendications 1 à 10 ou d'un module de turbine (1ca,1cb) selon la revendication 11 ou 12, dans lequel le premier et le second élément d'étanchéité (31,32) sont assemblés.
